# EUROPÄISCHE PATENTSCHRIFT

(11) **EP 1 894 793 B1**
(45) Veröffentlichungstag und Bekanntmachung des Hinweises auf die Patenterteilung: **15.04.2009**
(21) Anmeldenummer: 06018116.1
(22) Anmeldetag: 30.08.2006
(51) Int. Cl.: B60R 21/0132

(54) **Kollisionsschutzsystem**
Colision avoidance system
Système de prévention de collision

(43) Veröffentlichungstag der Anmeldung: 05.03.2008
(73) Patentinhaber: Delphi Technologies, Inc., Troy, Michigan 48007 (US)
(72) Erfinder: Waller, Edward J., Westfield, IN 46074 (US); Sygnarowicz, Daniel, 32-830 Wojnicz (PL); Brehmer, Frank, 42579 Heiligenhaus (DE); Haun, Jens, 44892 Bochum (DE)
(74) Vertreter: Denton, Michael John

(56) Entgegenhaltungen:
- EP-A- 1 566 315
- DE-A1-6102004 056 41
- US-A1- 2002 163 170
- US-A1- 2002 183 899

## Beschreibung

Die Erfindung betrifft ein Kollisionsschutzsystem der im Oberbegriff des Anspruchs 1 angegebenen Art. Ein vom Aufbau her vergleichbares Fahrzeugüberschlag-Sensorsystem ist in der US 2002/0 183 899 A1 beschrieben.

Kollisionen von Kraftfahrzeugen mit Fußgängern führen weltweit oftmals zu ernsthaften Verletzungen oder Todesfällen. So kommen allein in den USA jedes Jahr etwa 4700 Fußgänger aufgrund von Kollisionen mit Kraftfahrzeugen zu Tode, was 13 % aller Verkehrstoten ausmacht. Die überwiegende Anzahl von Todesfällen bei Fußgängern tritt allerdings in anderen Teilen der Welt auf. So verzeichnet Japan eine Todesrate an Fußgängern von 25 %, Europa und Australien jeweils 18 %, Thailand 47 % und Korea 45 %. Die globalen wirtschaftlichen Auswirkungen dieser Verletzungen und Todesfälle bringen Kosten von über 500 Milliarden Dollar mit sich.

Europaweit werden Anstrengungen unternommen, den Schutz von Fußgängern zu verbessern. So ist im November 2003 eine neue Richtlinie 2003/ 102/EG des Europäischen Parlaments und des Rates zum Schutz von Fußgängern und anderen ungeschützten Verkehrsteilnehmern vor und bei Kollisionen mit Kraftfahrzeugen erlassen worden. Darin sind beispielsweise Vorschriften bezüglich der maximal zulässigen Kopfbelastung beim Aufprall sowie entsprechende Testverfahren enthalten.

Die Einführung von Fußgänger-Schutzsystemen ist in zwei Phasen erfolgt. Dabei hat die erste Phase bereits im Jahre 2005 begonnen. Die zweite Phase soll im September des Jahres 2010 wirksam werden. Die erste Phase beinhaltet ein Kriterium, das durch sogenannte Passivelemente wie beispielsweise den Aufbau der Fronthaube und der Vorderseite eines Fahrzeugs erfüllt werden kann. In den letzten Jahren wurde eingehend diskutiert, wie den Erfordernissen der zweiten Phase Rechnung getragen werden kann. Nach erfolgter Durchführung einer Vielzahl von Tests und Auslegungsstudien sind die Erstausrüster zu dem Ergebnis gelangt, dass die Erfordernisse der zweiten Phase nur durch den Einsatz sogenannter aktiver Elemente wie beispielsweise einer aktiven Fronthaube erfüllt werden können. Angesichts dieser Erkenntnis wurde die Entwicklung sinnvoller Sicherheitssysteme beschleunigt. Ein wesentliches Merkmal dieser Systeme ist das Sensorsystem. Die Herausforderung besteht darin, Kollisionen mit Fußgängern von andersartigen Kollisionen zu unterscheiden, zu denen beispielsweise Kollisionen mit kleinen Tieren, Verkehrsleitpfosten, Fußbällen und so weiter gehören.

Eine Verringerung der Anzahl von Kollisionen mit Fußgängern oder eine Verringerung deren Auswirkungen kann auf unterschiedliche Art und Weise erreicht werden. Die hierbei in Frage kommenden Möglichkeiten reichen von passiven Lösungen des Fahrzeugentwurfs unter Verwendung weicher oder nachgiebiger Stoßdämpfer und Fronthauben bis zu aktiven Lösungen wie insbesondere auf elektrischen Kontakten basierenden Sensorsystemen unter Verwendung von aufspringenden Fronthauben oder der Fronthaube und/oder dem Stoßdämpfer zugeordneten aufblasbaren Rückhaltesystemen und Systemen zur Erfassung einer bevorstehenden Kollision zur Unfallvermeidung. Eine wesentliche Voraussetzung zur Erzielung eines entsprechenden Schutzes ist die rechtzeitige Auslösung dieser Einrichtungen. Eine Unterscheidung zwischen solchen Fällen, in denen eine Auslösung erforderlich ist und solchen Fällen, in denen keine Auslösung erforderlich ist und/oder eine Unterscheidung zwischen verschiedenen Auslösungsfällen kann durch eine Vielzahl unterschiedlicher Erfassungssysteme folgen, zu denen beispielsweise solche Sensoren wie Beschleunigungsmesser, Kontaktkraft-Sensoren, Radar und/oder auf sichtbarem oder auf IR-Licht basierende Technologien zählen. Die betreffenden Sensorsignale werden typischerweise mittels eines rechnergestützten Algorithmus verarbeitet, der in einem eingegliederten Mikroprozessor gespeichert sein kann und Ereignisse, für die eine Auslösung gewünscht ist, von solchen Ereignissen unterscheidet, für die keine Auslösung vorgesehen ist.

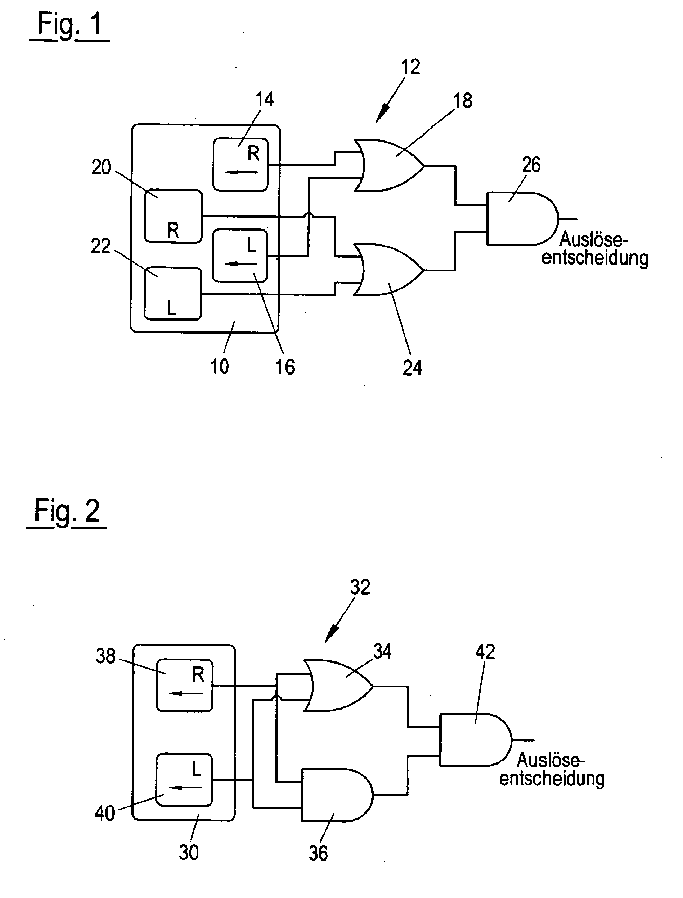

Ein bereits vorgeschlagenes Kollisionssystem ist in schematischer Darstellung in der Figur 1 gezeigt.

Dieses Kollisionsschutzsystem umfasst eine der Kollisionsüberwachung dienende Sensoreinheit 10, eine Steuer- und/oder Auswerteeinheit 12 und nicht dargestellte Kollisionsschutzmittel, wobei die von der Sensoreinheit 10 gelieferten Sensorsignale der Steuer- und/oder Auswerteeinheit 12 zugeführt sind und die Kollisionsschutzmittel über die Steuer- und/oder Auswerteeinheit 12 in Abhängigkeit von den Sensorsignalen auslösbar sind.

Die Sensoreinheit 10 umfasst zwei Beschleunigungssensoren 14, 16, die ausschließlich dazu dienen, Ereignisse, für die eine Auslösung der Kollisionsschutzmittel erforderlich ist, von andersartigen Ereignissen zu unterscheiden. Entsprechend sind die Sensorsignale dieser beiden Beschleunigungssensoren 14, 16 ausschließlich einer Diskriminierungslogik 18 der Steuer- und/oder Auswerteeinheit 12 zugeführt. Zudem umfasst die Sensoreinheit 10 zwei jeweils auf einen Stoßstangenkontakt ansprechende Sensoren 20, 22, die ausschließlich der Entsicherung der Kollisionsschutzmittel, d.h. einer Verifizierung des von den beiden anderen Sensoren 14, 16 erfassten, eine Auslösung der Kollisionsschutzmittel erfordernden Ereignisses dienen. Entsprechend sind die Sensorsignale der beiden Sensoren 20, 22 ausschließlich einer Entsicherungslogik 24 der Steuer- und/oder Auswerteeinheit zugeführt. Die Steuer- und/oder Auswerteeinheit 12 umfasst ferner eine Auslöselogik 26, die in Abhängigkeit von dem von der Diskriminierungslogik 18 gelieferten Diskriminierungssignal und dem von der Entsicherungslogik 24 gelieferten Entsicherungssignal eine Auslösungsentscheidung trifft bzw. ein Auslösesignal zur Auslösung der Kollisionsschutzmittel liefert.

Zur Vermeidung falscher Auslöseentscheidungen aufgrund von Systemstörungen werden hier also zwei voneinander unabhängige Sensorsysteme basierend einerseits auf den beiden Beschleunigungssensoren 14, 16 und andererseits auf den beiden Sensoren 20 und 22 eingesetzt.

Das aus der US 2002/183899 A1 bekannte Fahrzeugüberschlag-Sensorsystem umfasst einen Diskriminierungscontroller und eine Scharfschaltungssteuerlogik. Erste und zweite Geschwindigkeitssensoren werden sowohl zur Bestimmung eines erwarteten Überschlagereignisses durch den Diskriminierungscontroller als auch zur Erzeugung eines Überschlagscharfsignals durch die Scharfschaltungssteuerlogik herangezogen.

Der Erfindung liegt die Aufgabe zugrunde, ein verbessertes Kollisionsschutzsystem der eingangs genannten Art zu schaffen, das bei einfacherem und entsprechend kostengünstigerem Aufbau eine schnelle und zuverlässige Unterscheidung zwischen eine Auslösung der Kollisionsschutzmittel erfordernden Ereignissen und andersartigen Ereignissen gewährleistet.

Diese Aufgabe wird erfindungsgemäß dadurch gelöst, dass mittels der Entsicherungslogik jedes von einem jeweiligen Sensor stammende Signal daraufhin ausgewertet wird, ob wenigstens zwei aufeinander folgende Abtastwerte jeweils einen vorgebbaren Schwellwert überschreiten, und dass mittels der Entsicherungslogik innerhalb einer vorgebbaren Zeitspanne nach dem Zeitpunkt, zu dem wenigstens zwei aufeinander folgende Abtastwerte des von einem Sensor stammenden Signals die jeweiligen Schwellwerte überschritten haben, überprüft wird, ob auch wenigstens zwei aufeinander folgende Abtastwerte des vom anderen Sensor stammenden Signals die jeweiligen Schwellwerte überschritten haben, und die Entsicherungslogik dann, wenn dieses Kriterium erfüllt ist, ein das Erfordernis einer Aktivierung von Kollisionsschutzmitteln bestätigendes Entsicherungssignal liefert.

Aufgrund dieser Ausbildung kann der bisher erforderliche zusätzliche, lediglich der Entsicherung dienende Satz von Sensoren entfallen. Der primäre Satz von Sensoren dient nunmehr sowohl der Diskriminierung oder Unterscheidung unterschiedlicher Ereignisse als auch der Verifizierung der Unterscheidung oder Entsicherung der Kollisionsschutzmittel, wodurch die Zuverlässigkeit des Systems entsprechend erhöht und die Gesamtkosten entsprechend reduziert werden.

Das vorteilhafterweise automatisch arbeitende erfindungsgemäße Kollisionsschutzsystem kann beispielsweise als automatisches Personenschutzsystem oder auch allgemein als Kollisionsschutzsystem für beliebige andere Zwecke vorgesehen sein. So ist beispielsweise allgemein ein Einsatz des erfindungsgemäßen Kollisionsschutzsystems im Zusammenhang mit industriellen, kommerziellen oder medizinischen Anwendungen denkbar. Der Grundgedanke der Erfindung besteht in dem entsprechenden Einsatz eines Algorithmus, durch den die Sensor- oder Erfassungsstrategie dahingehend optimiert wird, dass die geforderte Zuverlässigkeit auch ohne einen zusätzlichen Sensorsatz oder Signaleingang gewährleistet ist.

Als Sensoren sind bevorzugt Beschleunigungssensoren vorgesehen.

Bei einer bevorzugten praktischen Ausführungsform des erfindungsgemä-ßen Kollisionsschutzsystems sind die Sensoren dem betreffenden bewegten Gegenstand zugeordnet. Dabei sind die Sensoren zweckmäßigerweise an unterschiedlichen Positionen des bewegten Gegenstandes vorgesehen. Denkbar ist beispielsweise eine Anordnung dieser Sensoren im Bereich der Frontseite des bewegten Gegenstandes. Dabei kann beispielsweise wenigstens ein Sensor in einem in Bewegungsrichtung betrachtet rechten Bereich und wenigstens ein Sensor in einem linken Bereich angeordnet sein.

Die die Diskriminierungslogik, die Entsicherungslogik und die Auslöselogik umfassende Steuer- und/oder Auswerteeinheit ist vorteilhafterweise dem betreffenden bewegten Gegenstand zugeordnet.

Von Vorteil ist insbesondere auch, wenn die Steuer- und/oder Auswerteeinheit wenigstens einen die Diskriminierungslogik, die Entsicherungslogik und die Auslöselogik umfassenden Mikrocontroller enthält.

Gemäß einer zweckmäßigen praktischen Ausführungsform sind die Sensorsignale der Steuer- und/oder Auswerteeinheit bzw. dem Mikrocontroller über getrennte A/ D-Wandler-Anschlüsse zugeführt.

Gemäß einer weiteren vorteilhaften Ausführungsform können die Sensorsignale der Steuer- und/ oder Auswerteeinheit bzw. dem Mikrocontroller auch über wenigstens ein SPI-Interface (SPI = Serial Peripheral Interface) zugeführt sein.

Bevorzugt basieren die Diskriminierungslogik und die Entsicherungslogik auf unterschiedlichen, vorzugsweise getrennt gespeicherten Algorithmen.

Dabei sind die der Diskriminierungslogik und der Entsicherungslogik zugrundeliegenden Algorithmen bevorzugt in physisch voneinander getrennten Speicherbereichen der Steuer- und/oder Auswerteeinheit bzw. des Mikrocontrollers gespeichert.

Bei einer bevorzugten praktischen Ausführungsform des erfindungsgemä-ßen Kollisionsschutzsystems sind die Sensorsignale der Entsicherungslogik über einen Stromdecoder und ein SPI-Interface zugeführt.

Vorteilhafterweise umfasst die Entsicherungslogik für jedes von einem jeweiligen Sensor stammende Signal ein dem SPI-Interface nachgeschaltetes Tiefpassfilter.

Das das Erfordernis einer Aktivierung von Kollisionsschutzmitteln bestätigende Entsicherungssignal wird vorzugsweise für eine vorgebbare Zeitdauer erzeugt.

Von Vorteil ist zudem, wenn die Auslöselogik nur dann ein eine Auslösung der Kollisionsschutzmittel bewirkendes Auslösesignal liefert, wenn sie gleichzeitig von der Diskriminierungslogik ein das Erfordernis einer Aktivierung von Kollisionsschutzmitteln signalisierendes Diskriminierungssignal und von der Entsicherungslogik ein das Erfordernis einer Aktivierung von Kollisionsschutzmitteln bestätigendes Entsicherungssignal erhält.

Wie bereits erwähnt, kann das erfindungsgemäße Kollisionsschutzsystem vorteilhafterweise insbesondere als Personenschutzsystem ausgeführt sein. Bevorzugt sind hierbei die Diskriminierungslogik zur Unterscheidung zwischen einer bevorstehenden Kollision des bewegten Gegenstandes mit einer Person und andersartigen bevorstehenden Kollisionen und die Entsicherungslogik zur Verifikation einer solchen bevorstehenden Kollision mit einer jeweiligen Person vorgesehen.

Die Erfindung wird im Folgenden anhand eines Ausführungsbeispiels unter Bezugnahme auf die Zeichnung näher erläutert; in dieser zeigen:
- Figur 1: eine schematische Darstellung eines bereits vorgeschlagenen Kollisionsschutzsystems,
- Figur 2: eine schematische Darstellung einer beispielhaften Ausführungsform des erfindungsgemäßen Kollisionsschutzsystems,
- Figur 3: eine schematische Darstellung einer beispielhaften Ausgestaltung des erfindungsgemäßen Entsicherungspfades bzw. der erfindungsgemäßen Entsicherungslogik und
- Figur 4: ein entsprechendes Flussdiagramm zur Erläuterung des Entsicherungspfades bzw. Entsicherungslogik gemäß Figur 3.

Figur 2 zeigt in schematischer Darstellung eine beispielhafte Ausführungsform des erfindungsgemäßen Kollisionsschutzsystems.

Dieses Kollisionsschutzsystem umfasst eine der Kollisionsüberwachung dienende Sensoreinheit 30, eine Steuer- und/oder Auswerteeinheit 32 sowie nicht dargestellte Kollisionsschutzmittel, wobei die von der Sensoreinheit 30 gelieferten Sensorsignale der Steuer- und/oder Auswerteeinheit 32 zugeführt sind und die Kollisionsschutzmittel über die Steuer- und/oder Auswerteeinheit in Abhängigkeit von den Sensorsignalen auslösbar sind.

Die Steuer- und/oder Auswerteeinheit 32 umfasst eine Diskriminierungslogik 34 zur Unterscheidung zwischen eine Aktivierung von Kollisionsschutzmitteln erfordernden bevorstehenden Kollisionen und andersartigen bevorstehenden Kollisionen sowie eine Entsicherungslogik 36 zur Entsicherung der Kollisionsschutzmittel.

Die Sensoreinheit 30 umfasst zwei Sensoren 38, 40, deren Sensorsignale jeweils sowohl der Diskriminierungslogik 34 als auch der Entsicherungslogik 36 der Steuer- und/oder Auswerteeinheit 32 zugeführt sind. Dabei liefert die Diskriminierungslogik 34 in Abhängigkeit von den Sensorsignalen der Sensoren 38, 40 ein Diskriminierungssignal und die Entsicherungslogik 36 in Abhängigkeit von den Sensorsignalen der Sensoren 38, 40 ein Entsicherungssignal.

Die Steuer- und/oder Auswerteeinheit 32 umfasst ferner eine Auslöselogik 42, um in Abhängigkeit von dem von der Diskriminierungslogik 34 stammenden Diskriminierungssignal und dem von der Entsicherungslogik 36 stammenden Entsicherungssignal eine entsprechende Auslöseentscheidung zu treffen bzw. ein Auslösesignal zur Auslösung der Kollisionsschutzmittel zu liefern.

Als Sensoren 38, 40 sind im vorliegenden Fall Beschleunigungssensoren vorgesehen.

Die Sensoren 38, 40 können insbesondere einen betreffenden bewegten Gegenstand, das heißt also beispielsweise einem Fahrzeug, insbesondere Kraftfahrzeug, zugeordnet sein. Wie bereits erwähnt, sind jedoch grundsätzlich auch andere Anwendungen denkbar.

Die Sensoren 38, 40 können zudem an unterschiedlichen Positionen des bewegten Gegenstandes vorgesehen sein. Beim vorliegenden Ausführungsbeispiel sind diese Sensoren 38, 40 in einem rechten bzw. einem linken Bereich der Frontseite des bewegten Gegenstandes bzw. Fahrzeuges vorgesehen.

Die die Diskriminierungslogik 34, die Entsicherungslogik 36 und die Auslöselogik 42 umfassende Steuer- und/oder Auswerteeinheit 32 ist beispielsweise dem betreffenden bewegten Gegenstand zugeordnet.

Die Steuer- und/oder Auswerteeinheit 32 kann wenigstens einen insbesondere die Diskriminierungslogik 34, die Entsicherungslogik 36 und die Auslöselogik 42 umfassenden Mikrocontroller enthalten.

Die Sensorsignale können der Steuer- und/oder Auswerteeinheit 32 bzw. dem Mikrocontroller beispielsweise über getrennte A/ D-Wandler-Anschlüsse zugeführt sein (A/D Analog/Digital).

Die Sensorsignale können der Steuer- und/oder Auswerteeinheit 32 bzw. dem Mikrocontroller beispielsweise auch über wenigstens ein SPI-Interface (SPI = Serial Peripheral Interface) zugeführt werden.

Die Diskriminierungslogik 34 und die Entsicherungslogik 36 basieren vorzugsweise auf unterschiedlichen, insbesondere getrennt gespeicherten Algorithmen. Dabei sind die der Diskriminierungslogik 34 und der Entsicherungslogik 36 zugrundeliegende Algorithmen vorteilhafterweise in physisch voneinander getrennten Speicherbereichen der Steuer- und/oder Auswerteeinheit 32 bzw. des Mikrocontrollers gespeichert.

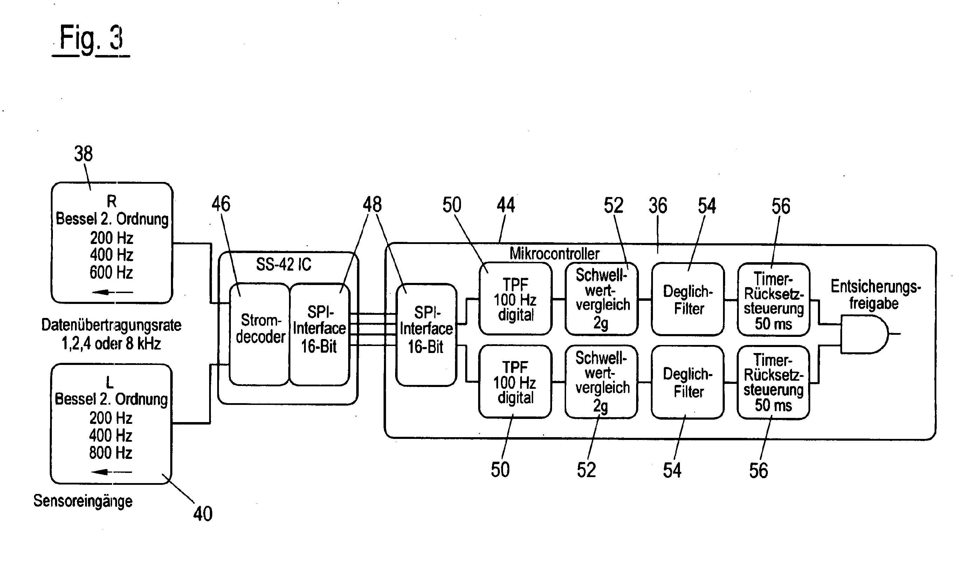

Fig. 3 zeigt in schematischer Darstellung eine beispielhafte Ausgestaltung des erfindungsgemäßen Entsicherungspfades bzw. der erfindungsgemäßen Entsicherungslogik 36.

Im vorliegenden Fall werden die Sensorsignale der Entsicherungslogik 36 eines Mikrocontrollers 44 über einen Stromdecoder 46 und ein SPI-Interface 48 zugeführt.

Die Entsicherungslogik 36 umfasst für jedes von einem jeweiligen Sensor 38 bzw. 40 stammende Signal ein dem SPI-Interface 48 nachgeschaltetes Tiefpassfilter 50. Wie bereits erwähnt, handelt es sich im vorliegenden Fall bei den beiden Sensoren 38, 40 um Beschleunigungssensoren. Mittels der beiden Tiefpassfilter 50 werden die beiden Eingangsbeschleunigungssignale also gefiltert, um hochfrequentes Rauschen zu beseitigen. Im vorliegenden Fall sind beispielsweise digitale Filter vorgesehen. Die Grenzfrequenz kann beispielsweise bei 100 Hz liegen. Bei dem SPI-Interface 48 handelt es sich im vorliegenden Fall beispielsweise um ein 16-Bit-Interface. Der betreffende Algorithmus zur Erfüllung der Entsicherungsfunktion ist im vorliegenden Fall beispielsweise in dem Mikrocontroller 36 enthalten.

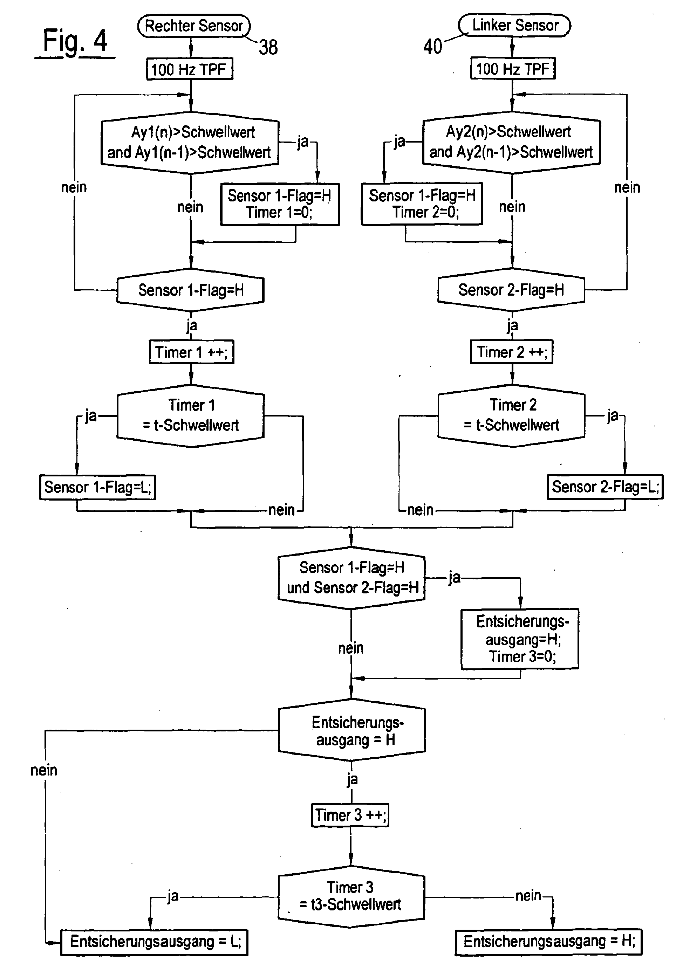

Die gefilterten Abtastwerte der beiden Sensorsignale werden getrennt jeweils mit einem vorgebbaren Schwellwert verglichen, wozu der Mikrocontroller 36 zwei getrennte Schwellwert-Vergleichseinheiten 52 umfasst. Es erfolgt also für jedes Sensorsignal getrennt ein jeweiliger Vergleich. Bei den vorgebbaren Schwellwerten handelt es sich um Kalibrierparameter. Im Anschluss an die beiden getrennten Schwellwert-Vergleichseinheiten 52 ist jeweils ein sogenanntes "Deglitch"-Filter 54 vorgesehen. Wird ein jeweiliger Schwellwert durch ein jeweiliges Eingangsbeschleunigungssignal bei zwei aufeinanderfolgenden Abtastwerten (Deglitch-Schutz) überschritten, so wird jeweils ein Flag gesetzt und ein Timer gestartet (vgl. auch das Flussdiagramm gemäß Figur 4), dessen Länge bzw. zeitliche Dauer vorzugsweise bei der Kalibrierung vorgebbar ist. Wie der Figur 3 entnommen werden kann, ist den beiden Deglitch-Filtern 54 jeweils eine Timer- oder Zähler-Rücksetzsteuereinheit 56 zugeordnet, die ebenso wie die zuvor genannten Elemente wieder Teil des im Mikrocontroller 36 enthaltenen Entsicherungsalgorithmus sein kann.

Nachdem ein jeweiliges Flag gesetzt wurde, wartet das System auf eine Bestätigung vom zweiten bzw. anderen Sensor während einer bestimmten Zeitspanne.

Eine Bestätigung wird dann erhalten, wenn zwei aufeinanderfolgende Abtastwerte des vom anderen Sensor stammenden Beschleunigungssignals den betreffenden vorgebbaren Schwellwert überschreiten, womit ein zweites Flag gesetzt wird. Wurde die erforderliche Bestätigung erhalten bzw. erfasst, das heißt festgestellt, dass beide Sensorflags gesetzt sind, so wird der Ausgang der Entsicherungslogik 36 gesetzt, so dass das betreffende Ausgangssignal der Entsicherungslogik 36 die Entsicherungsfreigabe signalisiert, wodurch das betreffende erfasste Ereignis als ein die Auslösung von Kollisionsschutzmitteln erforderndes Ereignis bestätigt wird. Der Ausgang der Entsicherungslogik 36 bleibt so lange gesetzt, bis ein weiterer Timer (vgl. den Timer 3 in Figur 4) eine vorgebbare Zeitdauer erreicht hat, bei der es sich wieder um einen insbesondere beim Kalibrieren vorgebbaren Wert handeln kann.

Wie der Figur 3 überdies entnommen werden kann, können den beiden Sensoren 38, 40 beispielsweise Bessel-Filter zweiter Ordnung (zum Beispiel 200 Hz, 400 Hz oder 800 Hz) zugeordnet sein. Die Messdatenrate kann beispielsweise bei 1, 2, 4 oder 8 kHz liegen. Die für die jeweiligen Vergleiche herangezogenen Schwellwerte können beispielsweise bei 2 g (g = Erdbeschleunigung) liegen. Eine Rückstellung über die Timer-Rücksetzsteuereinheiten 56 kann beispielsweise nach 50 ms erfolgen. Bei den Tiefpassfiltern 50 kann es sich, wie bereits erwähnt, beispielsweise um Digitalfiltern handeln. Grundsätzlich sind jedoch auch davon abweichende Ausführungen denkbar.

Figur 4 zeigt ein entsprechendes Flussdiagramm zur Erläuterung des Entsicherungspfades bzw. der Entsicherungslogik 36 gemäß Figur 3.

Im linken oberen Teil des Flussdiagramms ist der Pfad für das vom rechten Sensor 38 stammende Beschleunigungssignal und im rechten oberen Teil der Pfad für das vom linken Sensor 40 stammende Beschleunigungssignal dargestellt.

Das Beschleunigungssignal des rechten Sensors 38 wird zunächst durch das betreffende Tiefpassfilter (100 Hz) gefiltert. Im Anschluss daran wird überprüft, ob für zwei aufeinanderfolgende Abtastwerte des betreffenden Beschleunigungssignals der betreffende Schwellwert überschritten wurde. Falls dies der Fall ist, wird das betreffende Flag gesetzt. Der zugeordnete Timer wird auf Null gesetzt. Anschließend wird überprüft, ob das Flag gesetzt ist oder nicht. Falls dies nicht der Fall sein sollte, wird wiederholt geprüft, ob der Schwellwert bei zwei aufeinanderfolgenden Abtastwerten überschritten wurde. Wurde festgestellt, dass das Flag gesetzt ist, so zählt der Timer weiter. Im Anschluss daran wird abgefragt, ob der Timer einen vorgebbaren zeitlichen Schwellwert erreicht hat. Falls dies der Fall ist, wird das Flag wieder zurückgesetzt. Der für das Beschleunigungssignal vom linken Sensor 40 bestimmte Pfad ist gleichartig ausgeführt. Die hier vorgesehenen Schwellwerte können unabhängig von den Schwellwerten des ersten Pfades vorgebbar sein. Das Flag ist unabhängig von dem im ersten Pfad gesetzten bzw. rückgesetzten Flag. Der Timer ist unabhängig von dem im ersten Pfad vorgesehenen Timer. Auch der zeitliche Schwellwert für den Timer kann unabhängig von dem betreffenden, für den ersten Pfad vorgesehenen Schwellwert vorgebbar sein.

Im Anschluss an die beiden soeben beschriebenen Pfade wird überprüft, ob beide Flags gesetzt sind oder nicht. Falls beide Flags gesetzt sind, wird der Ausgang der Entsicherungslogik gesetzt, das heißt aktiviert. Gleichzeitig wird ein weiterer Timer (Timer 3) auf Null gesetzt.

Im Anschluss daran wird überprüft, ob der Ausgang der Entsicherungslogik 36 gesetzt ist oder nicht. Falls dies Fall ist, zählt der betreffende Timer (Timer 3) weiter. Falls der Ausgang der Entsicherungslogik nicht gesetzt ist, bleibt der Ausgang in diesem Zustand, so dass das Ausgangssignal der Entsicherungslogik inaktiv ist, wodurch signalisiert wird, dass das Vorliegen eines die Auslösung von Kollisionsschutzmitteln erfordernden Ereignisses nicht bestätigt werden kann. Wird dagegen festgestellt, dass der Ausgang der Entsicherungslogik gesetzt ist, so zählt der betreffende Timer (Timer 3) weiter. Im Anschluss daran wird dann geprüft, ob dieser Timer eine vorzugsweise vorgebbare weitere zeitliche Schwelle (t3) überschritten hat oder nicht. Falls dies der Fall ist, wird der Ausgang der Entsicherungslogik zurückgesetzt. Andernfalls bleibt der Ausgang der Entsicherungslogik gesetzt.

Mittels der Entsicherungslogik 36 wird also jedes von einem jeweiligen Sensor 38, 40 stammende Beschleunigungssignal daraufhin ausgewertet, ob wenigstens zwei aufeinanderfolgende Abtastwerte jeweils einen vorgebbaren Schwellwert überschreiten. Zudem kann mittels der Entsicherungslogik 36 innerhalb einer vorgebbaren Zeitspanne nach dem Zeitpunkt, zu dem wenigstens zwei aufeinanderfolgende Abtastwerte des von einem Sensor stammenden Signals die jeweiligen Schwellwerte überschritten haben, überprüft werden, ob auch wenigstens zwei aufeinanderfolgende Abtastwerte des vom anderen Sensor stammenden Signals die jeweiligen Schwellwerte überschritten haben. Ist dieses Kriterium erfüllt, liefert die Entsicherungslogik 36 ein das Erfordernis einer Aktivierung von Kollisionsschutzmitteln bestätigendes Entriegelungssignal. Das das Erfordernis einer Aktivierung von Kollisionsschutzmitteln bestätigende Entsicherungssignal kann für eine vorgebbare Zeitdauer erzeugt werden.

Die Auslöselogik 42 (vgl. Fig. 2) liefert nur dann ein eine Auslösung der Kollisionsschutzmittel bewirkendes Auslösesignal, wenn sie gleichzeitig von der Diskriminierungslogik 34 ein das Erfordernis einer Aktivierung von Kollisionsschutzmitteln signalisierendes Diskriminierungssignal und von der Entsicherungslogik 36 ein das Erfordernis einer Aktivierung von Kollisionsschutzmitteln bestätigendes Entsicherungssignal erhält.

Wie bereits erwähnt, kann das Kollisionsschutzsystem insbesondere als Personenschutzsystem ausgeführt sein. In diesem Fall können die Diskriminierungslogik 34 zur Unterscheidung zwischen einer bevorstehenden Kollision des bewegten Gegenstandes mit einer Person und andersartigen bevorstehenden Kollisionen und die Entsicherungslogik 36 zur Verifikation einer solchen bevorstehenden Kollision mit einer jeweiligen Person vorgesehen sein.

Bei der hier angewandten Entsicherungsstrategie können also sowohl die Unterscheidungsfunktion (Diskriminierung) als auch die Entsicherungsfunktion (Validierung) durch zwei unterschiedliche Beschleunigungssensoren erfüllt werden. Die von den beiden Beschleunigungssensoren stammenden Daten können durch zwei unterschiedliche Algorithmen verarbeitet werden, die vorzugsweise in physikalisch getrennten Speicherbereichen vorgesehen sein können. Der bisher erforderliche weitere Satz von Sensoren ausschließlich für die Entsicherung kann entfallen. Mit der erfindungsgemäßen Entsicherungslogik wird vorausgesetzt, dass die beiden Eingangssignale den Entsicherungspfad zur Erfüllung des Entsicherungs-Kriteriums vervollständigen. Damit wird die Gefahr, dass versehentlich eine falsche Auslöseentscheidung infolge eines Fehlers bei einem der beiden Sensoren getroffen wird, auf ein Minimum reduziert. Wie bereits erwähnt, kann der betreffende Entsicherungsalgorithmus beispielsweise in einem Mikrocontroller oder dergleichen gespeichert sein. Ein zur Verfügung stehender Datensatz wird dann entsprechend verarbeitet. Mit der erfindungsgemäßen Lösung werden Gesamtkosten des Kollisionsschutzsystems unter Gewährleistung einer optimalen Sicherheit deutlich reduziert.

### Bezugszeichenliste

- 10: Sensoreinheit
- 12: Steuer- und/oder Auswerteeinheit
- 14: Beschleunigungssensor
- 16: Beschleunigungssensor
- 18: Diskriminierungslogik
- 20: Sensor
- 22: Sensor
- 24: Entsicherungslogik
- 26: Auslöselogik
- 30: Sensoreinheit
- 32: Steuer- und/oder Auswerteeinheit
- 34: Diskriminierungslogik
- 36: Entsicherungslogik
- 38: Sensor
- 40: Sensor
- 42: Auslöselogik
- 44: Mikrocontroller
- 46: Stromdecoder
- 48: SPI-Interface
- 50: Tiefpassfilter
- 52: Schwellwert, Vergleichseinheit
- 54: Deglitch-Filter
- 56: Timer-Rücksetzsteuereinheit

## Patentansprüche

1. Kollisionsschutzsystem insbesondere für bewegte Gegenstände wie z.B. Fahrzeuge, mit einer der Kollisionsüberwachung dienenden Sensoreinheit (30), einer Steuer- und/oder Auswerteeinheit (32) und Kollisionsschutzmitteln, wobei die von der Sensoreinheit (30) gelieferten Sensorsignale der Steuer- und/oder Auswerteeinheit (32) zugeführt sind und die Kollisionsschutzmittel über die Steuer- und/oder Auswerteeinheit in Abhängigkeit von den Sensorsignalen auslösbar sind, die Steuer- und/oder Auswerteeinheit (32) eine Diskriminierungslogik (34) zur Unterscheidung zwischen eine Aktivierung von Kollisionsschutzmitteln erfordernden bevorstehenden Kollisionen und andersartigen bevorstehenden Kollisionen sowie eine Entsicherungslogik (36) zur Entsicherung der Kollisionsschutzmittel umfasst, die Sensoreinheit (30) wenigstens zwei Sensoren (38, 40) umfasst, deren Sensorsignale jeweils sowohl der Diskriminierungslogik (34) als auch der Entsicherungslogik (36) der Steuer- und/oder Auswerteeinheit (32) zugeführt sind, wobei die Diskriminierungslogik (34) in Abhängigkeit von den Sensorsignalen der Sensoren (38, 40) ein Diskriminierungssignal und die Entsicherungslogik (36) in Abhängigkeit von den Sensorsignalen der Sensoren (38, 40) ein Entsicherungssignal liefert, und die Steuer- und/oder Auswerteeinheit (32) ferner eine Auslöselogik (42) umfasst, um in Abhängigkeit von dem Diskriminierungssignal und dem Entsicherungssignal ein Auslösesignal zur Auslösung der Kollisionsschutzmittel zu liefern,
**dadurch gekennzeichnet,**
**dass** mittels der Entsicherungslogik (36) jedes von einem jeweiligen Sensor (38, 40) stammende Signal daraufhin ausgewertet wird, ob wenigstens zwei aufeinander folgende Abtastwerte jeweils einen vorgebbaren Schwellwert überschreiten, und dass mittels der Entsicherungslogik (36) innerhalb einer vorgebbaren Zeitspanne nach dem Zeitpunkt, zu dem wenigstens zwei aufeinander folgende Abtastwerte des von einem Sensor stammenden Signals die jeweiligen Schwellwerte überschritten haben, überprüft wird, ob auch wenigstens zwei aufeinander folgende Abtastwerte des vom anderen Sensor stammenden Signals die jeweiligen Schwellwerte überschritten haben, und die Entsicherungslogik (36) dann, wenn dieses Kriterium erfüllt ist, ein das Erfordernis einer Aktivierung von Kollisionsschutzmitteln bestätigendes Entsicherungssignal liefert.

2. Kollisionsschutzsystem nach Anspruch 1,
**dadurch gekennzeichnet,**
**dass** als Sensoren (38, 40) Beschleunigungssensoren vorgesehen sind.

3. Kollisionsschutzsystem nach Anspruch 1 oder 2,
**dadurch gekennzeichnet,**
**dass** die Sensoren (38, 40) dem betreffenden bewegten Gegenstand zugeordnet sind.

4. Kollisionsschutzsystem nach Anspruch 3,
**dadurch gekennzeichnet,**
**dass** die Sensoren (38, 40) an unterschiedlichen Positionen des bewegten Gegenstandes vorgesehen sind.

5. Kollisionsschutzsystem nach Anspruch 3 oder 4,
**dadurch gekennzeichnet,**
**dass** die Sensoren (38, 40) im Bereich der Frontseite des bewegten Gegenstandes vorgesehen sind.

6. Kollisionsschutzsystem nach einem der vorhergehenden Ansprüche,
**dadurch gekennzeichnet,**
**dass** die die Diskriminierungslogik (34), die Entsicherungslogik (36) und die Auslöselogik (42) umfassende Steuer- und/oder Auswerteeinheit (32) dem betreffenden bewegten Gegenstand zugeordnet ist.

7. Kollisionsschutzsystem nach einem der vorhergehenden Ansprüche,
**dadurch gekennzeichnet,**
**dass** die Steuer- und/oder Auswerteeinheit (32) wenigstens einen die Diskriminierungslogik (34), die Entsicherungslogik (36) und die Auslöselogik (42) umfassenden Mikrocontroller enthält.

8. Kollisionsschutzsystem nach einem der vorhergehenden Ansprüche,
**dadurch gekennzeichnet,**
**dass** die Sensorsignale der Steuer- und/oder Auswerteeinheit (32) bzw. dem Mikrocontroller über getrennte A/D-Wandler-Anschlüsse zugeführt sind.

9. Kollisionsschutzsystem nach einem der vorhergehenden Ansprüche,
**dadurch gekennzeichnet,**
**dass** Sensorsignale der Steuer- und/oder Auswerteeinheit (32) bzw. dem Mikrocontroller über wenigstens ein SPI-Interface zugeführt sind.

10. Kollisionsschutzsystem nach einem der vorhergehenden Ansprüche,
**dadurch gekennzeichnet,**
**dass** die Diskriminierungslogik (34) und die Entsicherungslogik (36) auf unterschiedlichen, vorzugsweise getrennt gespeicherten Algorithmen basieren.

11. Kollisionsschutzsystem nach Anspruch 10,
**dadurch gekennzeichnet,**
**dass** die der Diskriminierungslogik (34) und der Entsicherungslogik (36) zugrunde liegenden Algorithmen in physisch voneinander getrennten Speicherbereichen der Steuer- und/oder Auswerteeinheit (32) bzw. des Mikrocontrollers gespeichert sind.

12. Kollisionsschutzsystem nach einem der vorhergehenden Ansprüche,
**dadurch gekennzeichnet,**
**dass** die Sensorsignale der Entsicherungslogik (36) über einen Stromdecoder (46) und ein SPI-Interface (48) zugeführt sind.

13. Kollisionsschutzsystem nach Anspruch 12,
**dadurch gekennzeichnet,**
**dass** die Entsicherungslogik (36) für jedes von einem jeweiligen Sensor (38, 40) stammende Signal ein dem SPI-Interface (48) nachgeschaltetes Tiefpassfilter (50) umfasst.

14. Kollisionsschutzsystem nach einem der vorhergehenden Ansprüche,
**dadurch gekennzeichnet,**
**dass** das das Erfordernis einer Aktivierung von Kollisionsschutzmitteln betätigende Entsicherungssignal für eine vorgebbare Zeitdauer erzeugt wird.

15. Kollisionsschutzsystem nach einem der vorhergehenden Ansprüche,
**dadurch gekennzeichnet,**
**dass** die Auslöselogik (42) nur dann ein eine Auslösung der Kollisionsschutzmittel bewirkendes Auslösesignal liefert, wenn sie gleichzeitig von der Diskriminierungslogik (34) ein das Erfordernis einer Aktivierung von Kollisionsschutzmitteln signalisierendes Diskriminierungssignal und von der Entsicherungslogik (36) ein das Erfordernis einer Aktivierung von Kollisionsschutzmitteln bestätigendes Entsicherungssignal erhält.

16. Kollisionsschutzsystem nach einem der vorhergehenden Ansprüche,
**dadurch gekennzeichnet,**
**dass** es als Personenschutzsystem ausgeführt ist.

17. Kollisionsschutzsystem nach Anspruch 16,
**dadurch gekennzeichnet,**
**dass** die Diskriminierungslogik (34) zur Unterscheidung zwischen einer bevorstehenden Kollision des bewegten Gegenstandes mit einer Person und andersartigen bevorstehenden Kollisionen und die Entsicherungslogik (36) zur Verifikation einer solchen bevorstehenden Kollision mit einer jeweiligen Person vorgesehen sind.

## Claims

1. Collision protection system, in particular for moving objects such as vehicles, comprising a sensor unit (30) for collision monitoring, a control and/or evaluation unit (32) and collision protection means, wherein the sensor signals, provided by the sensor unit (30), are input to the control and/or evaluation unit (32) and the collision protection means are triggerable by the control and/or evaluation unit (32) depending on the sensor signals, the control and/or evaluation unit (32) including a discrimination logic (34) for discrimination between impending collisions requiring an activation of collision protection means and different impending collisions as well as a safety release logic (36) for releasing the collision protection means, the sensor unit (30) including at least two sensors (38, 40), their sensor signals being input to both the discrimination logic (34) and the release logic (36) of the control and/or evaluation unit (32), respectively, the discrimination logic (34) providing a discrimination signal depending on the sensor signals of the sensors (38, 40) and the release logic (36) providing a release signal depending on the sensor signals of the sensors (38, 40), and the control and/or evaluation unit (32) further includes a trigger logic (42) to provide a trigger signal, depending on the discrimination signal and the release signal, to trigger the collision protection means,
**characterized in that**
each signal originating from a respective sensor (38, 40) is evaluated by means of the release logic (36) regarding whether at least two consecutive sampling values each exceed a predeterminable threshold, and that it is tested by means of the release logic (36) in a predeterminable time period subsequently to the time, at which at least two consecutive sampling values of the signal originating from a sensor exceed the respective thresholds, whether also at least two consecutive sampling values of the signal originating from the other sensor exceed the respective thresholds, and, if this criteria is met, the release logic (36) then provides a release signal confirming the need for an activation of collision protection means.

2. Collision protection system according to claim 1,
**characterized in that**
acceleration sensors are provided as sensors (38, 40).

3. Collision protection system according to claim 1 or 2,
**characterized in that**
the sensors (38, 40) are associated with the respective moving object.

4. Collision protection system according to claim 3,
**characterized in that**
the sensors (38, 40) are provided at different positions of the moving object.

5. Collision protection system according to claim 3 or 4,
**characterized in that**
the sensors (38, 40) are provided in the front side area of the moving object.

6. Collision protection system according to one of the preceding claims,
**characterized in that**
the control and/or evaluation unit (32) comprising the discrimination logic (34), the release logic (36) and the trigger logic (42) is associated with the respective moving object.

7. Collision protection system according to one of the preceding claims,
**characterized in that**
the control and/or evaluation unit (32) includes at least a microcontroller comprising the discrimination logic (34), the release logic (36) and the trigger logic (42).

8. Collision protection system according to one of the preceding claims,
**characterized in that**
the sensor signals are provided to the control and/or evaluation unit (32) and the microcontroller, respectively, through separate A/D converter ports.

9. Collision protection system according to one of the preceding claims,
**characterized in that**
sensor signals are provided to the control and/or evaluation unit (32) and the microcontroller, respectively, through at least a SPI interface.

10. Collision protection system according to one of the preceding claims,
**characterized in that**
the discrimination logic (34) and the release logic (36) are based on different, preferably separately stored, algorithms.

11. Collision protection system according to claim 10,
**characterized in that**
the algorithms forming the basis of the discrimination logic (34) and the release logic (36) are stored in physically separated memory areas of the control and/or evaluation unit (32) and the microcontroller, respectively.

12. Collision protection system according to one of the preceding claims,
**characterized in that**
the sensor signals are provided to the release logic (36) through a current decoder (46) and a SPI interface (48).

13. Collision protection system according to claim 12,
**characterized in that**
the release logic (36) includes, for each signal originating from a respective sensor (38, 40), a low pass filter (50) downstream of the SPI interface (48).

14. Collision protection system according to one of the preceding claims,
**characterized in that**
the release signal confirming the need for an activation of collision protection means is generated for a predeterminable time period.

15. Collision protection system according to one of the preceding claims,
**characterized in that**
the trigger logic (42) only provides a trigger signal causing a triggering of the collision protection means, if it simultaneously receives from the discrimination logic (34) a discrimination signal signaling the need for an activation of collision protection means, and from the release logic (36) a release signal confirming the need for an activation of collision protection means.

16. Collision protection system according to one of the preceding claims,
**characterized in that**
it is implemented as a personal protection system.

17. Collision protection system according to claim 16,
**characterized in that**
the discrimination logic (34) is provided for discrimination between an impending collision of the moving object with a person and different impending collisions, and the release logic (36) is provided for verification of such an impending collision with a respective person.

## Revendications

1. Système de protection anticollision, en particulier pour des objets en déplacement comme par exemple des véhicules automobiles, comprenant une unité de détection (30) servant à la surveillance de collisions, une unité de commande et/ou d'évaluation (32), et des moyens de protection anticollision, dans lequel les signaux de détection délivrés par l'unité de détection (30) sont fournis à l'unité de commande et/ou d'évaluation (32) et les moyens de protection anticollision sont susceptibles d'être déclenchés via l'unité de commande et/ou d'évaluation en fonction des signaux de détection, l'unité de commande et/ou d'évaluation (32) comprend un circuit logique de discrimination (34) pour faire une différence entre des collisions imminentes exigeant une activation des moyens de protection anticollision et d'autres collisions imminentes, ainsi qu'un circuit logique de déblocage (36) pour le déblocage des moyens de protection anticollision, l'unité de détection (30) comprenant au moins deux détecteurs (38, 40), dont les signaux de détection sont fournis aussi bien au circuit logique de discrimination (34) qu'au circuit logique de déblocage (36) de l'unité de commande et/ou d'évaluation (32), ledit circuit logique de discrimination (34) délivrant un signal de discrimination en fonction des signaux de détection des détecteurs (38, 40) et le circuit logique de déblocage (36) délivrant un signal de déblocage en fonction des signaux de détection des détecteurs (38, 40), et l'unité de commande et/ou d'évaluation (32) comprend en outre un circuit logique de déclenchement (42) pour délivrer un signal de déclenchement en fonction du signal de discrimination et du signal de déblocage afin de déclencher les moyens de protection anticollision,
**caractérisé en ce que**
au moyen du circuit logique de déblocage (36) chaque signal provenant d'un détecteur respectif (38, 40) est évalué pour savoir si au moins deux valeurs palpées l'une après l'autre dépassent respectivement une valeur seuil prédéterminée, et **en ce que**, au moyen du circuit logique de déblocage (36), le système vérifie à l'intérieur d'une période temporelle prédéterminée après l'instant auquel au moins deux valeurs palpées l'une après l'autre du signal provenant d'un détecteur ont dépassé les valeurs seuil respectives, pour savoir si au moins deux valeurs palpées l'une après l'autre du signal provenant de l'autre détecteur ont dépassé les valeurs seuil respectives, et lorsque de ce critère est satisfait, le circuit logique de déblocage (36) délivre un signal de déblocage qui confirme la requête d'une activation des moyens de protection anticollision.

2. Système de protection anticollision selon la revendication 1, **caractérisé en ce que** l'on prévoit des détecteurs d'accélération à titre de détecteurs (38, 40).

3. Système de protection anticollision selon la revendication 1 ou 2, **caractérisé en ce que** les détecteurs (38, 40) sont associés à l'objet concerné en déplacement.

4. Système de protection anticollision selon la revendication 3, **caractérisé en ce que** les détecteurs (38, 40) sont prévus à des positions différentes de l'objet en déplacement.

5. Système de protection anticollision selon la revendication 3 ou 4, **caractérisé en ce que** les détecteurs (38, 40) sont prévus dans la région du côté avant de l'objet en déplacement.

6. Système de protection anticollision selon l'une des revendications précédentes, **caractérisé en ce que** l'unité de commande et/ou d'évaluation (32) qui comprend le circuit logique de discrimination (34), le circuit logique de déblocage (36), et le circuit logique de déclenchement(42) est associé à l'objet concerné en déplacement.

7. Système de protection anticollision selon l'une des revendications précédentes, **caractérisé en ce que** l'unité de commande et/ou d'évaluation (32) comprend au moins un microcontrôleur qui englobe le circuit logique de discrimination (34), le circuit logique de déblocage (36) et le circuit logique de déclenchement (42).

8. Système de protection anticollision selon l'une des revendications précédentes, **caractérisé en ce que** les signaux de détection sont amenés à l'unité de commande et/ou d'évaluation (32) ou respectivement au microcontrôleur via des bornes séparées d'un convertisseur analogique/numérique.

9. Système de protection anticollision selon l'une des revendications précédentes, **caractérisé en ce que** les signaux de détection sont amenés à l'unité de commande et/ou d'évaluation (32) ou respectivement au microcontrôleur via au moins une interface SPI.

10. Système de protection anticollision selon l'une des revendications précédentes, **caractérisé en ce que** le circuit logique de discrimination (34) et le circuit logique de déblocage (36) sont basés sur des algorithmes différents, de préférence mémorisés de façon séparée.

11. Système de protection anticollision selon la revendication 10, **caractérisé en ce que** les algorithmes à la base du circuit logique de discrimination (34) et du circuit logique de déblocage (36) sont mémorisés dans des zones mémoires séparées physiquement l'une de l'autre dans l'unité de commande et/ou d'évaluation (32) ou dans le microcontrôleur.

12. Système de protection anticollision selon l'une des revendications précédentes, **caractérisé en ce que** les signaux de détection du circuit logique de déblocage (36) sont amenés via un décodeur de courant (46) et une interface SPI (48).

13. Système de protection anticollision selon la revendication 12, **caractérisé en ce que** le circuit logique de déblocage (36) comprend, pour chaque signal provenant d'un détecteur respectif (38, 40), un filtre passe-bas (50) branché à la suite de l'interface SPI (48).

14. Système de protection anticollision selon l'une des revendications précédentes, **caractérisé en ce que** le signal de déblocage confirmant la requête d'une activation des moyens de protection anticollision est généré pendant une période prédéterminée.

15. Système de protection anticollision selon l'une des revendications précédentes, **caractérisé en ce que** le circuit logique de déclenchement (14) délivre un signal de déclenchement provoquant un déclenchement des moyens de protection anticollision uniquement lorsqu'il reçoit du circuit logique de discrimination (34) un signal de discrimination signalisant la requête d'une activation des moyens de protection anticollision et simultanément du circuit logique de déblocage (36) un signal de déblocage confirmant la requête d'une activation des moyens de protection anticollision.

16. Système de protection anticollision selon l'une des revendications précédentes, **caractérisé en ce qu'**il est réalisé sous forme d'un système de protection de personnes.

17. Système de protection anticollision selon la revendication 16, **caractérisé en ce que** le circuit logique de discrimination (34) est prévu pour faire la différence entre une collision imminente de l'objet en déplacement avec une personne et d'autres collisions imminentes, et le circuit logique de déblocage (36) est prévu pour la vérification d'une telle collision imminente avec une personne respective.
